# EUROPÄISCHE PATENTSCHRIFT

(11) **EP 1 774 618 B1**
(45) Veröffentlichungstag und Bekanntmachung des Hinweises auf die Patenterteilung: **16.12.2009**
(21) Anmeldenummer: 05764034.4
(22) Anmeldetag: 02.07.2005
(51) Int. Cl.: H01Q 1/04, H01Q 1/30, H04R 1/44, G01V 1/20

(54) **VERFAHREN ZUR HERSTELLUNG EINER ANTENNENSEKTION FÜR EINE UNTERWASSERANTENNE**
METHOD FOR PRODUCTION OF AN ANTENNA SECTION FOR A SUBMARINE ANTENNA
PROCEDE DE FABRICATION D'UNE SECTION D'ANTENNE POUR UNE ANTENNE IMMERGEE

(30) Priorität: 05.08.2004 DE 102004038033
(43) Veröffentlichungstag der Anmeldung: 18.04.2007
(73) Patentinhaber: ATLAS ELEKTRONIK GMBH, 28305 Bremen (DE)
(72) Erfinder: BUSCH, Rainer, 26131 Oldenburg (DE); SCHÜTZ, Ranier-Martin, 28816 Stuhr (DE)
(74) Vertreter: Wasiljeff, Johannes M.B.
(86) Internationale Anmeldenummer: PCT/EP2005/007165
(87) Internationale Veröffentlichungsnummer: WO 2006/015665

(56) Entgegenhaltungen:
- EP-A- 0 181 506
- EP-A- 0 654 953
- WO-A-93/17356
- DE-A1- 3 739 185
- DE-B3- 10 323 493
- DE-C1- 19 518 461

## Beschreibung

Die Erfindung betrifft ein Verfahren zur Herstellung einer voneinander beabstandete Hydrofone aufweisenden Antennensektion für eine aus mehreren Antennensektionen zusammensetzbaren Unterwasserantenne der im Oberbegriff des Anspruchs 1 definierten Gattung.

Eine bekannte, als Schleppstrang konzipierte Unterwasserantenne (DE 195 18 461 C1) besteht aus einer Mehrzahl von Schleppstrang-Sektionen, die mit ihren Strangenden aneinandergesetzt sind. Jede Schleppstrang-Sektion weist eine Mehrzahl von hintereinander mit konstantem Abstand voneinander aufgereihten Hydrofonen auf, die in einem biegeelastischen Schlauch aus Polyethylen aufgenommen sind und von einem abgebundenem Gel im Abstand voneinander und von der Schlauchwand in ihrer Position fixiert sind. Die Hydrofone sind an der Signalleitung und Stromzufuhr dienenden elektrischen Leitungen aus Kupfer oder aus Lichtleitfasern angeschlossen, die an den Strangenden aus der Schleppstrang-Sektion zum Verbinden mit der nächsten Schleppstrang-Sektion herausgeführt sind. Zur Herstellung einer Schleppstrang-Sektion werden die ihr zugeordneten Hydrofone in einem sehr groben Nylon-Netz mit wenigen, relativ elastischen Längsfäden im genauen Längsabstand voneinander fixiert. Dieses dadurch entstehende sog. Elementskelett wird zusammen mit dem noch flüssigen Gel in den Schlauch eingeschwommen, wobei Maßnahmen getroffen werden, dass die Hydrofone während des Abbinden des Gels mittig in dem Schlauch fixiert sind. Solche Maßnahmen können beispielsweise darin bestehen, dass der Schlauch während des Abbindens des Gels rotiert, so dass das Skelett sich mittig ausrichtet, oder dass an dem Skelett weiche, dünne Borsten angeordnet sind, die sich an der Schlauchinnenwand abstützen und dadurch die Mittigkeit der Hydrofone sicherstellen.

Eine bekannte flächenhafte Unterwasserantenne (DE 103 23 493 B3) weist eine Vielzahl von hohlkugelförmigen, elektroakustischen Wandlern auf, die auf einem ebenen Träger voneinander beabstandet in Reihen und Spalten angeordnet sind. Die einzelnen Wandler sitzen dabei auf einem auf den Träger aufgelegten Abstandshalter aus einem Elastomer. Alle Wandler mit Abstandshalter sind in einem Verguss eingebettet, der die Wandler allseits umschließt. Der Verguss besteht aus einem im Gießverfahren verarbeitbaren Elastomer, vorzugsweise aus Polyurethan. Der Verguss ist bezüglich seiner vom Träger abgekehrten Oberfläche der von dem Träger abgekehrten Oberfläche der Wandler unmittelbar angepasst, so dass die Wanddicke des Vergusses um den hohlkugelförmigen Wandler herum konstant ist.

Der Erfindung liegt die Aufgabe zugrunde, ein fertigungstechnisch kostengünstiges Verfahren zur Herstellung einer Antennensektion anzugeben, mit dem die Hydrofone toleranzgenau zur Antennensektion montiert werden können.

Die Aufgabe ist erfindungsgemäß durch die Merkmale im Anspruch 1 gelöst.

Das erfindungsgemäße Verfahren hat den Vorteil, dass die Hydrofone mit wenigen Montagemitteln in eine abstandsgenaue Position voneinander und mittig in den vorgegebenen Hohlraum eingebracht werden und in dieser Position durch das kurzfristig abbindende Gel fixiert werden. Der Saugheber zum Transport und Positionieren der Hydrofone ist fertigungstechnisch einfach und erfordert nur geringe Werkzeugkosten. Das Verfahren ist vollautomatisierbar, wobei die Montagezeit durch Vorsehen parallelarbeitender Montagemittel, wie Saugheber und Greifhalter, noch wesentlich verkürzt werden kann. Das Verfahren kann sowohl zur Herstellung von Antennensegmenten für sog. Schleppstränge, bei denen die Hydrofone hintereinandergereiht in einem biegeelastischen Schlauch aufgenommen sind, als auch zur Herstellung von Antennensegmenten für sog. Antennenarrays eingesetzt werden, bei denen die Hydrofone mit konstantem Abstand voneinander in Reihen und/oder Spalten in einem Kunststoffumguss untergebracht sind. Der Kunststoffumguss kann sowohl ein ebener, als auch ein gekrümmter, steifer Körper sein.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird als Saugheber ein Rohr verwendet, dessen Außendurchmesser deutlich kleiner ist als der Außendurchmesser der als Kugeln ausgebildeten Hydrofone. An dem vom Hydrofon abgekehrten Ende des Rohrs wird ein Saug- oder Unterdruck erzeugt, wodurch das Hydrofon am vorderen Ende des Rohrs mittels Saugkraft gehalten, in den Hohlraum verbracht und in seiner dortigen Position bis zur Gelabbindung gehalten wird. Dann wird durch Wegfall des Saugdrucks der Saugheber vom Hydrofon gelöst.

Die Erfindung ist anhand eines in der Zeichnung illustrierten Ausführungsbeispiels im folgenden näher beschrieben. Es zeigen:
- Fig. 1: eine schematische Illustration einzelner Verfahrensschritte des Verfahrens zur Herstellung einer Antennensektion,
- Fig. 2: ausschnittweise eine nach dem Verfahren hergestellte Antennen-Sektion für eine Unterwasser-Schleppantenne,
- Fig. 3: ausschnittweise eine nach dem Verfahren hergestellte Antennensektion für ein Unterwasser-Antennenarray.

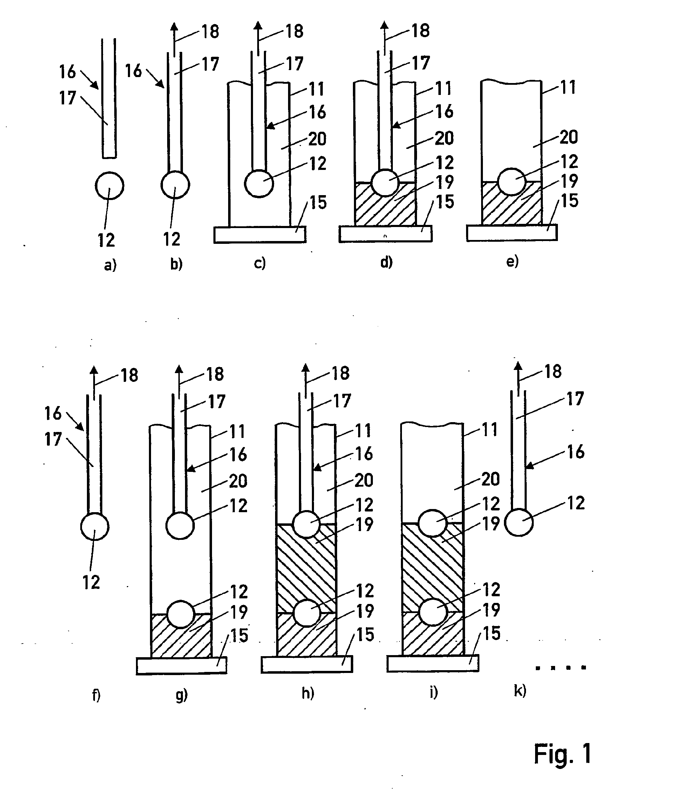

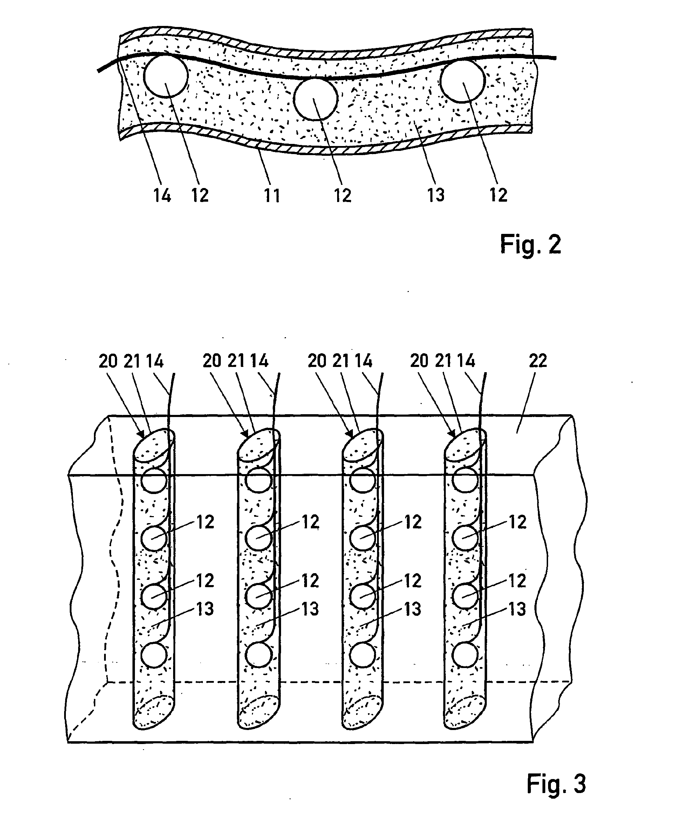

Mit dem in Fig. 1 in einzelnen Verfahrensschritten illustrierten Verfahren wird beispielsweise eine Antennensektion für eine sog. Schleppantenne hergestellt, wie diese ausschnittweise in Fig. 2 im schematischen Schnitt dargestellt ist. Die Antennensektion weist einen flexiblen Schlauch 11, der vorzugsweise aus Polyethylen besteht, und eine Mehrzahl von hintereinander, in konstantem Abstand voneinander aufgereihten Hydrofonen 12 auf, die hier als Kugelelemente ausgebildet sind aber auch andere geometrische Formen, z.B. Zylinderform, besitzen können. Die Hydrofone 12 sind mittig im Schlauch 11 mit radialem Abstand von der Schlauchwand angeordnet und durch eine Gelfüllung 13 des Schlauchs 11 in ihrer Position fixiert. Die Hydrofone 12 sind an elektrischen Leitungen aus Kupfer oder Glasfasern angeschlossen, die der Signalleitung und der Stromzufuhr für die Hydrofone 12 dienen. Mit dem in Fig. 1 illustrierten Verfahren wird die Antennensektion gemäß Fig. 2 wie folgt hergestellt:

Der einen Hohlraum 20 darstellende, leere Schlauch 11 wird vertikal ausgerichtet und an einem Ende durch eine Verschlussplatte 15 abgeschlossen. Zum Transport und Positionierung der Hydrofone 12 wird ein Saugheber 16 verwendet (Fig. 1a). Der Saugheber 16 besteht aus einem Rohr 17, dessen lichter Rohrdurchmesser deutlich kleiner ist als der Außendurchmesser der als Kugeln ausgebildeten Hydrofone 12. An dem Rohrende, das von dem zum Hydrofon 12 weisenden Rohrende abgekehrt ist, wird ein Saug- oder Unterdruck erzeugt, der in Fig. 1 durch die Pfeile 18 angedeutet ist.

Durch diesen Saugdruck wird das Hydrofon 12 am Rohrende festgelegt und kann mittels des Saughebers 16 transportiert werden (Fig. 1b).

Ein erstes Hydrofon 12 wird nunmehr mittig in den Schlauch 11 mit vorgegebenem Abstand vom Schlauchende, also von der Verschlussplatte 15, eingesetzt und in dieser Position gehalten (Fig. 1c). Nunmehr wird flüssiges Gel 19 in den Schlauch 11 in einer solchen Menge eingefüllt, dass das von Saugheber 16 gehaltene Hydrofon 12 teilweise von dem Gel 19 umschlossen wird. Die Gelmenge darf nicht so groß sein, dass auch das Rohr 17 des Saughebers 16 vom Gel 19 mitumfasst wird. In Fig. 1 ist beispielhaft eine solche Gelmenge eingefüllt, dass das Hydrofon 12 hälftig vom Gel 19 umschlossen ist. Der Saugdruck am Saugheber 16 und die Positionierung des Saughebers 16 wird solange aufrechterhalten, bis das Gel 19 weitgehend abgebunden d.h. geliert ist (Fig. 1d). Aufgrund der Gelierung kann das Hydrofon 12 seine Position im Schlauch 11 nicht mehr verändern, wenn der Saugdruck vom Saugheber 16 abgeschaltet und der Saugheber 16 wieder aus dem Schlauch 11 herausgenommen wird (Fig. 1e). Mit dem Saugheber 16 wird ein weiteres Hydrofon 12 gegriffen (Fig. 1f) und in den Schlauch 11 in einen vorgegebenen Abstand vom zuvor eingesetzten Hydrofon 12 verbracht (Fig. 1g). In dieser Position wird das zweite Hydrofon 12 gehalten, während wiederum flüssiges Gel 19 in den Schlauch 11 eingefüllt wird, das das zweite Hydrofon 12 teilweise umschließt (Fig. 1h). Ist die neuerliche Gelfüllung geliert, so wird der Saugheber 16 durch Abschalten des Saugdrucks vom zweiten Hydrofon 12 abgehoben und aus dem Schlauch 11 herausgenommen (Fig. 1i). Mit dem Saugheber 16 wird ein neues Hydrofon 12 gegriffen (Fig. 1k) und in gleicher Weise wie vorstehend beschrieben in den Schlauch 11 eingesetzt, wonach wiederum flüssiges Gel 19 eingefüllt wird. Die beschriebenen Verfahrensschritte wiederholen sich solange, bis die vorgegebene Anzahl von Hydrofonen 12 in den Schlauch 11 eingesetzt ist.

Die in Fig. 3 ausschnittweise dargestellte Antennensektion für ein Unterwasser-Antennenarray, eine sog. Flachantenne, wird nach dem gleichen, in Fig. 1 illustrierten Verfahren hergestellt. Die Antennensektion weist einen Hohlraum 20 in Form von mehreren, im gleichen Abstand voneinander angeordneten Kanälen 21 auf, die in einem Kunststoffkörper 22 eingebettet sind und diesen ganz durchziehen. Diese zylinderförmigen Kanäle 21 werden in der Weise hergestellt, dass Röhrchen im vorgegebenen Abstand in eine Gießform eingelegt und mit Kunststoff umgossen werden. Nach der Entformung werden die Röhrchen wieder aus dem Kunststoffkörper 22 entfernt und so die den Kunststoffkörper 22 vollständig durchziehenden zylindrischen Kanäle 21 gewonnen. Wie aus Fig. 3 ersichtlich sind, sind in jedem Kanal 21 beispielhaft vier Hydrofone 12 im definierten Abstand voneinander übereinander angeordnet und halten einen radialen Abstand von der Innenwand des Kanals 21 ein. Der Kanal 21 ist mit dem Gel 19 gefüllt und das gelierte Gel 19 fixiert die Hydrofone 12. Jedes Hydrofon 12 ist an einer elektrischen Zuleitung 14 angeschlossen, und alle elektrischen Zuleitungen sind an einer Seite der Kanäle 21 herausgeführt.

Das Einbringen der Hydrofone 12 in die Kanäle 21 des Kunststoffkörpers 22 erfolgt in gleicher Weise wie in Fig. 1 für den ebenfalls einen Hohlraum 20 bildenden Schlauch 11 der Schleppantenne gemäß Fig. 2. Der Kunststoffkörper 21 wird hierzu in der in Fig. 3 dargestellten Position auf eine Verschlussplatte 15 aufgesetzt, so dass alle Kanäle 21 am unteren Ende verschlossen sind. Danach werden mittels vorzugsweise parallel arbeitender Saugheber 16 die einzelnen Hydrofone 12 - wie zu Fig. 1 beschrieben - in die Kanäle 21 eingesetzt, und die Kanäle 21 - wie in Fig. 1 beschrieben - sukzessive mit Gel 19 gefüllt. Es ergibt sich die in Fig. 3 ausschnittweise skizzierte Antennensektion, die mit weiteren gleichartigen Antennensektionen, deren Kunststoffkörper in Längsrichtung oder in Querrichtung an den Kunststoffkörper 21 angesetzt werden, zu einer Flächenantenne ergänzt werden kann. Die durch die Gelfüllung 13 "schwimmend" im Kunststoffkörper 21 gehaltenen Hydrofone 12 sind weitgehend von dem Kunststoffkörper 21 schallentkoppelt.

## Patentansprüche

1. Verfahren zur Herstellung einer voneinander beabstandete Hydrofone aufweisenden Antennensektion für eine aus mehreren Antennensektionen zusammensetzbaren Unterwasserantenne, bei dem die Hydrofone (12) hintereinandergereiht in einem langgestreckten Hohlraum (20) im Abstand voneinander und zur Innenwand des Hohlraums (20) eingebracht werden und der Hohlraum (20) zur Fixierung der Hydrofone (12) mit einem flüssigen Gel (19) gefüllt wird, das nach Einfüllen geliert, **dadurch gekennzeichnet, dass** jedes Hydrofon (12) mittels eines Saughebers (16) in den mit seiner Längsachse im wesentlichen vertikal ausgerichteten Hohlraum (20) im vorgegebenen Abstand von dem zuvor eingesetzten Hydrofon (12) etwa mittig eingesetzt und gehalten wird, anschließend flüssiges Gel (19) in den Hohlraum (20) in einer solchen Menge eingefüllt wird, dass das flüssige Gel (19) zumindest teilweise das vom Saugheber (16) gehaltene Hydrofon (12) umschließt, dass nach Gelieren des eingefüllten Gels (19) der Saugheber (16) zum Einsetzen eines nächsten Hydrofons (12) aus dem Holraum (20) herausgezogen wird und dass diese Verfahrensschritte solange wiederholt werden, bis die vorgegebene Anzahl der Hydrofone (12) in dem Hohlraum (20) plaziert ist.

2. Verfahren nach Anspruch 1, **dadurch gekennzeichnet, dass** als Hohlraum (20) ein eine Antennensektion der Unterwasserantenne definierender flexibler Schlauch (11) benutzt wird.

3. Verfahren nach Anspruch 2, **dadurch gekennzeichnet, dass** als Schlauchmaterial Polyethylen verwendet wird.

4. Verfahren nach Anspruch 1, **dadurch gekennzeichnet, dass** als Hohlraum (20) mehrere, im vorzugsweise gleichen Abstand voneinander parallel verlaufende Kanäle (21) in einem eine Antennensektion der Unterwasserantenne definierenden Kunststoffkörper (22) benutzt werden.

5. Verfahren nach Anspruch 4, **dadurch gekennzeichnet, dass** zur Herstellung der Kanäle (21) in eine Gussform Röhrchen im Parallelabstand voneinander eingesetzt und mit Kunststoff umgossen werden und dass nach Entformen die Röhrchen aus dem Kunststoffkörper (22) entfernt werden.

6. Verfahren nach einem der Ansprüche 1 - 5, **dadurch gekennzeichnet, dass** als Saugheber (16) ein Rohr (17) verwendet wird, dessen lichter Durchmesser kleiner ist als der Außendurchmesser der als Kugeln ausgebildeten Hydrofone (12), und dass der Saugheber (16) mit dem einen Rohrende auf das Hydrofon (12) aufgesetzt und am anderen Rohrende ein Saugdruck erzeugt wird.

## Claims

1. A method for production of an antenna section, which has hydrophones at a distance from one another, for an underwater antenna which can be assembled from a plurality of antenna sections, in which the hydrophones (12) are introduced in a row one behind the other into an elongated cavity (20), at a distance from one another and at a distance from the inner wall of the cavity (20), and the cavity (20) is filled with a liquid gel (19) in order to fix the hydrophones (12), which liquid gel (19) forms a gel after being introduced, **characterized in that** each hydrophone (12) is inserted and held approximately centrally by means of a suction lifter (16) into the cavity (20), whose longitudinal axis is aligned essentially vertically, at a predetermined distance from the previously inserted hydrophone (12), an amount of liquid gel (19) is then introduced into the cavity (20) such that the liquid gel (19) at least partially surrounds the hydrophone (12) which is being held by the suction lifter (16), **in that**, once the gel (19) which has been introduced has formed a gel, the suction lifter (16) is removed from the cavity (20) for insertion of a next hydrophone (12) and **in that** these method steps are repeated until the predetermined number of hydrophones (12) have been placed in the cavity (20).

2. The method as claimed in claim 1, **characterized in that** a flexible tube (11) which defines an antenna section of the underwater antenna is used as the cavity (20).

3. The method as claimed in claim 2, **characterized in that** polyethylene is used as the flexible tube material.

4. The method as claimed in claim 1, **characterized in that** a plurality of channels (21), which preferably run parallel at the same distance from one another, are used as the cavity (20) in a plastic body (22) which defines one antenna section of the underwater antenna.

5. The method as claimed in claim 4, **characterized in that** small tubes are inserted, separated from one another but parallel, into a casting mold in order to produce the channels (21), and are encapsulated with plastic, and **in that**, after removal from the mold, the small tubes are removed from the plastic body (22).

6. The method as claimed in one of claims 1-5, **characterized in that** a tube (17) whose unobstructed diameter is less than the external diameter of the hydrophones (12), which are in the form of spheres, is used as the suction lifter (16), and **in that** the one tube end of the suction lifter (16) is placed on the hydrophone (12), and a suction pressure is produced at the other tube end.

## Revendications

1. Procédé de fabrication d'une section d'antenne présentant des hydrophones disposés à distance mutuelle pour une antenne sous-marine constituée de plusieurs sections d'antenne, dans lequel les hydrophones (12) sont rangés les uns derrière les autres à distance les uns des autres dans une cavité allongée (20) et sont placés contre la paroi intérieure de la cavité (20), tandis que pour fixer les hydrophones (12), la cavité (20) est remplie d'un gel liquide (19) qui gélifie après avoir été placé, **caractérisé en ce que** au moyen d'une pipette (16), chaque hydrophone (12) est inséré et maintenu sensiblement au centre et à distance prédéterminée de l'hydrophone (12) inséré précédemment dans la cavité (20) dont l'axe longitudinal est orienté essentiellement à la verticale, **en ce que** le gel liquide (19) est placé dans la cavité (20) en quantité telle que le gel liquide (19) entoure au moins partiellement l'hydrophone (12) retenu par la pipette (16), **en ce qu'**après gélification du gel liquide (19), la pipette (16) est sortie de la cavité (20) pour placer l'hydrophone (12) suivant et **en ce que** ces étapes de traitement sont répétées jusqu'à avoir placé dans la cavité (20) le nombre prédéterminé d'hydrophones (12).

2. Procédé selon la revendication 1, **caractérisé en ce que** comme cavité (20), il utilise un tuyau flexible (11) qui définit une section de l'antenne sous-marine.

3. Procédé selon la revendication 2, **caractérisé en ce qu'**il utilise du polyéthylène comme matériau du tuyau flexible.

4. Procédé selon la revendication 1, **caractérisé en ce que** comme cavité (20), il utilise plusieurs corps (22) en matière synthétique qui définissent dans l'une des sections de l'antenne sous-marine des canaux (21) qui s'étendent parallèlement les uns aux autres, de préférence à même distance les uns des autres.

5. Procédé selon la revendication 4, **caractérisé en ce que** pour fabriquer les canaux (21), on place des tubes parallèlement et à distance les uns des autres dans un moule de coulée, on les englobe dans de la matière synthétique et on enlève les tubes hors du corps (22) en matière synthétique après les avoir démoulés.

6. Procédé selon l'une des revendications 1 à 5,
**caractérisé en ce que** comme pipette (16), il utilise un tube (17) dont le diamètre intérieur est inférieur au diamètre extérieur des hydrophones (12) de configuration sphérique, **en ce qu'**une extrémité du tube de la pipette (16) est placée contre l'hydrophone (12) et **en ce qu'**une dépression est appliquée sur l'autre extrémité.
